# EUROPEAN PATENT SPECIFICATION

(11) **EP 1 997 784 B1**
(45) Date of publication and mention of the grant of the patent: **23.03.2016**
(21) Application number: 07740456.4
(22) Date of filing: 23.03.2007
(51) Int. Cl.: C03C 25/24, G02B 6/44, C03C 25/10, G02B 6/02

(54) **UNIT OPTICAL FIBER**
EINHEITENGLASFASER
MODULE DE FIBRE OPTIQUE

(30) Priority: 23.03.2006 JP 2006080587
(43) Date of publication of application: 03.12.2008
(73) Proprietor: The Furukawa Electric Co., Ltd., Chiyoda-ku Tokyo 100-8322 (JP)
(72) Inventor: UI, Keisuke, Chiyoda-ku, Tokyo 1008322 (JP); SENO, Atsuyoshi, Chiyoda-ku, Tokyo 1008322 (JP); SATO, Tetsuo, Chiyoda-ku, Tokyo 1008322 (JP)
(74) Representative: Leinweber & Zimmermann
(86) International application number: PCT/JP2007/057018
(87) International publication number: WO 2007/108564

(56) References cited:
- WO-A2-01/83393
- FR-A1- 2 839 159
- JP-A- 2000 351 920
- JP-A- 2002 512 585
- JP-A- 2003 342 044
- JP-A- 2003 530 294

## Description

### TECHNICAL FIELD

The present invention relates to an optical fiber with adequate yellowing resistance.

### BACKGROUND ART

An optical fiber has a general structure having: a soft primary coating formed on the outer surface of a bare glass fiber; and a hard secondary coating further formed on the outer surface thereof. A UV curable resin is frequently used as a material for the primary coating and the secondary coating.

Urethane acrylate is known as the UV curable resin to be used for the coating material for the optical fiber. However, some materials coated on conventional coated optical fibers have easily changed the quality affected by heat or light, have especially shown coloration or discoloration such as yellowing if having been left under the condition of light exposure as in the outdoor or under a fluorescent lamp or under a hot condition, for a long period of time, and have thus been inferior in so-called weathering resistance and heat resistance. This is considered to be induced by the phenomenon that when an optical fiber is exposed to the light, a photoinitiator remaining in a coating decomposes and produces a free radical to change the resin into yellow.

In order to solve this problem, a technique of, for instance, using a coating material containing a particular oxidation inhibitor is described in Japanese Patent Application Laid-Open No. 2001-316434, Japanese Patent Application Laid-Open No. 2002-264276, Japanese Patent Application Laid-Open No. 2003-103717 and Japanese Patent Application Laid-Open No. 2003-104760, which is formed of a compound having a structure expressed by the following General Formula (1) in which an R group is characterized by a methyl group. However, even when using these oxidation inhibitors, if the coating material contained an aromatic polyisocyanate (e.g. tolylene diisocyanate) for the polyether-based urethane (meth) acrylate, the optical fiber occasionally showed decreased yellowing resistance. It is known that a compound having a phenolic group generally tends to form a quinone structure affected by a free radical and turn into yellow.

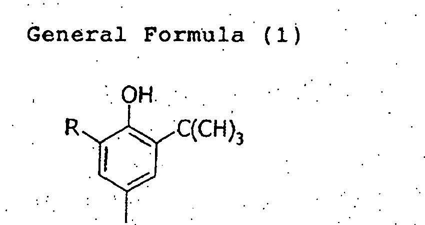

In order to solve the problem, a technique of using an alicyclic polyisocyanate for a polyisocyanate component is described in Japanese Patent Application Laid-Open No. H04-02154:6 (Japanese Patent Publication No. H08-052776) and Japanese Patent Application Laid-Open No. 2000-351920.

Documents JP 2000 351920 A, WO 01/83393 A2 and FR 2 839 159 A1 each disclose a resin composition for an optical fiber coating, the coated material comprising a photoinitiator.

### DISCLOSURE OF THE INVENTION

However, there is a case in which an optical fiber can not help using an aromatic polyisocyanate from the viewpoint of the reactivity and physical properties of a cured material. A coating material 15 which employs the aromatic polyisocyanate but has adequate yellowing resistance is demanded also because the aromatic polyisocyanate is generally inexpensive. An object of the present invention is to provide an optical fiber having the adequate 20 yellowing resistance even when employing the coating material containing the aromatic polyisocyanate.

An optical fiber according to the present invention includes the features of claim 1. It has a coating made from a UV curable resin formed on an outer surface of a bare optical glass fiber, and is characterized in that the coated material includes an unreacted photoinitiator in an amount of 2.4 × 10⁻³ mole equivalent or less in 1 g of the material. The UV curable resin includes urethane acrylate which contains an aromatic polyisocyanate as a polyisocyanate component of the urethane acrylate. The UV curable resin may employ tolylene diisocyanate for the aromatic polyisocyanate.

The optical fiber according to the present invention shows adequate yellowing resistance even when using the aromatic polyisocyanate as the polyisocyanate component of the coating material.

### BRIEF DESCRIPTION OF THE DRAWING

FIG. 1 shows a sectional view of an optical fiber according to the present invention;
FIG. 2 illustrates an optical fiber array for measuring yellowing resistance; and
FIG. 3 illustrates two overlapped optical fiber arrays.

### BEST MODES FOR CARRYING OUT THE INVENTION

A photoinitiator needs to be excessively added into a UV curable resin in consideration of its absorbance and the quantum efficiency for radical formation, in order to optimize reaction efficiency. However, if an unreacted photoinitiator would remain in a coated material after having been cured, the unreacted photoinitiator is decomposed by being irradiated later with light to form a free radical which consumes an oxidation inhibitor. The phenomenon occasionally aggravates weather resistance and causes a discoloration of an aromatic polyisocyanate. Accordingly, it is preferable in general for the photoinitiator to remain as little as possible after the coating material has been cured.

On the other hand, in a secondary coating material is used a combination of a fast curing acylphosphine-oxide photoinitiator and a surface curing acetophenone photoinitiator in general, so that it is improved in heat resistance, weathering resistance and surface properties, as is described in Japanese Patent Application Laid-Open No. H02-248470 and Japanese Patent Application Laid-Open No. H04-006125. The acylphosphine-oxide photoinitiator can be decomposed into a deep layer because it cannot absorb light in the UV range of wavelength any longer by photodecomposition, whereas the acetophenone photoinitiator is hardly decomposed into the deep layer by irradiation because it can still absorb light in such a range of wavelength even after decomposition. In addition, when a photoinitiator with a low absorption coefficient is used in a coating material, the photoinitiator needs to be excessively added, because of having a low reaction efficiency.

Such a problem is solved by controlling an amount of an unreacted photoinitiator in 1 g of a coated material on an optical fiber to 2.4 × 10⁻³ mole equivalent or less.

The present invention will be now described in more detail based on examples, but the present invention is not limited to these examples.

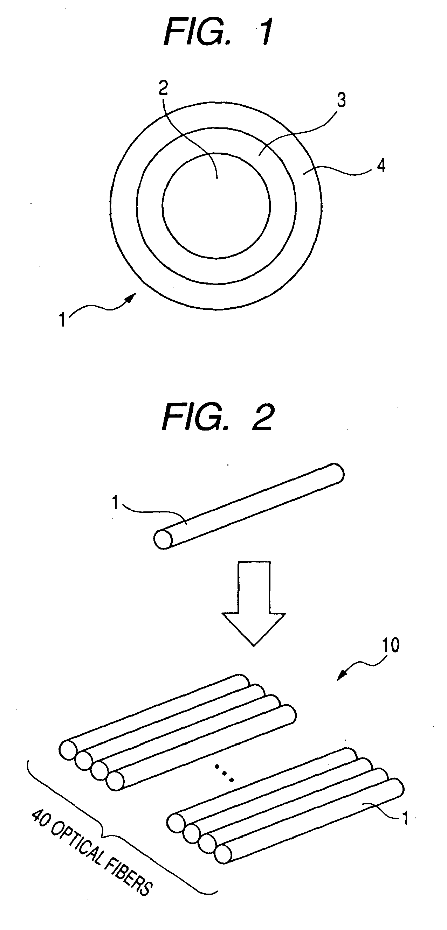

FIG. 1 shows a sectional view of an optical fiber according to the present invention. The form of the optical fiber to which the present invention can be applied is not limited in particular, but can include a form where it has a soft primary layer and a hard secondary layer of a UV curable resin dual-coated on the outer surface of an optical glass fiber, such as a silica glass fiber or a multicomponent glass fiber, with an outside diameter of 125 µm.

Optical fibers were produced by using a primary material and each secondary material shown below.

A base resin for the primary material was prepared by the steps of: preparing an oligomer by urethane-bonding tolylene diisocyanate that is an aromatic polyisocyanate to both ends of polypropylene glycol with a molecular weight of 3,000, and further urethane-bonding hydroxyethyl acrylate to both ends thereof; and blending 60 parts of the oligomer, 30 parts of nonylphenol EO-modified acrylate (product made by TOAGOSEI CO., LTD. ARONIXM-113) and 10 parts of n-vinyl caprolactam (product made by ISP Corp.).

A base resin for the secondary material was prepared by the steps of: preparing an oligomer by urethane-bonding tolylene diisocyanate that is an aromatic polyisocyanate to both ends of polypropylene glycol with a molecular weight of 1,000, and further urethane-bonding hydroxyethyl acrylate to both ends thereof; and blending 60 parts of the oligomer, 20 parts of isobornyl acrylate (product made by KYOEISHA CHEMICAL Co., LTD LIGHT-ACRYLATE IB-XA) and 20 parts of tricyclodecanedimethylol diacrylate (product made by KYOEISHA CHEMICAL Co., LTD LIGHT-ACRYLATE DCP-A).

An employed oxidation inhibitor was not such a particular compound as is characterized in that a group (R) in a compound having a structure represented by the following General Formula (1) is a methyl group, but a general hindered phenolic oxidation inhibitor of 2,2-thio-diethylenebis-[3-(3,5-di-tert-butyl-4-hydroxyphenyl) propionate](product made in Ciba Specialty Chemicals, IRGANOX 1035), which is a compound having a structure expressed by the following General Formula (1), wherein the group (R) is a tert-butyl group. Specifically, one part of the oxidation inhibitor was added to each of a primary material and a secondary material.

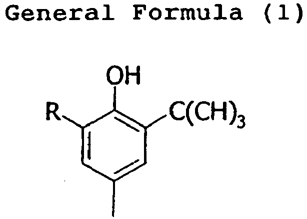

In addition, an acylphosphine-oxide photoinitiator, 2,4,6-trimethylbenzoyl diphenylphosphine oxide (product made by BASF Lucirin (registered trademark) TPO) was added to a primary material. The acylphosphine-oxide photoinitiator, Lucirin (registered trademark) TPO and an acetophenone photoinitiator, 1-hydroxycyclohexyl phenylketone (product made by Ciba Specialty Chemicals, IRGACURE (registered trademark) 184) were added to a secondary material.

Optimal amounts of acylphosphine-oxide photoinitiators (photoinitiator (A) in Table 1) to be added to a primary material and a secondary material was determined on the basis of a curing rate (ratio of Young's modulus when the materials are little irradiated to that when much irradiated). Examples 1 to 3 and Comparative Examples 1 and 2 were prepared by changing the amount of an acetophenone photoinitiator (photoinitiator B in Table 1) to be added into the secondary material, which does not greatly affect the curing rate. The amount of an unreacted photoinitiator and yellowing resistance were examined on the obtained optical fiber. Results are shown in Table 1 (unit in parentheses is × 10⁻³ mole equivalent).

**Table 1**

| | Ex. 1 | Ex. 2 | Ex. 3 | Com. Ex. 1 | Com. Ex. 2 |
|---|---|---|---|---|---|
| Photoinitiator (A) in primary material (Lucirin (registered trademark) TPO, wt.%, unit in parentheses is × 10⁻³ mole equivalent) | 2.3 (6.6) | | | | |
| Photoinitiator (A) in secondary material (Lucirin (registered trademark) TPO, wt.%, unit in parentheses is × 10⁻³ mole equivalent) | 1.6 (4.6) | | | | |
| Amount (B) of photoinitiator in secondary material (IRGACURE (registered trademark) 184, wt.%, unit in parentheses is × 10⁻³ mole equivalent) | 0.05 (0.24) | 0.3 (1.5) | 0.6 (2.9) | 1.0 (4.9) | 2.1 (10) |
| Amount of unreacted Lucirin (registered trademark) TPO in 1 g of coated material (× 10⁻³ mole equivalent) | 1.5 | | | | |
| Amount of unreacted IRGACURE (registered trademark) 184 in 1 g of coated material (× 10⁻³ mole equivalent) | 0.073 | 0.44 | 0.87 | 1.5 | 3.1 |
| Total amount of unreacted photoinitiator in 1 g of coated material (× 10⁻³ mole equivalent) | 1.6 | 1.9 | 2.4 | 2.9 | 4.5 |
| Yellowing (ΔYI after having been left for 30 days under fluorescent lamp) | 1 | 2 | 4 | 7 | 12 |

Each type of the resultant optical fibers were for the amount of the unreacted photoinitiator and. yellowing measured according to the following procedures: weighing 1 g of the optical fibers; extracting compounds therein by musing a chloroform/methanol mixture solvent; and subjecting the mixture solvent to HPLC analysis. Inertsil ODS-3 (No. 2-214) of 3.0 × 250 mm was used as a column, and an acetonitrile/water mixture was used as a mobile phase.

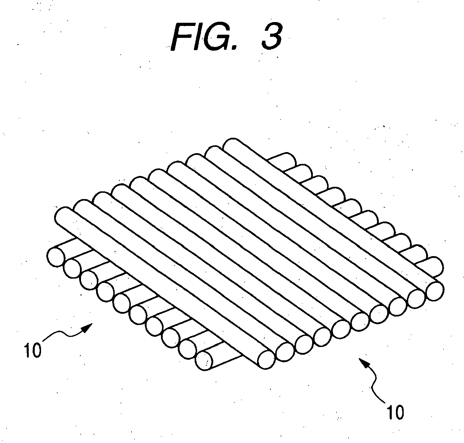

Yellowing was measured by the following steps of: preparing two optical fiber arrays 10 shaped like a bamboo blind by arranging 40 optical fibers 1 in a width direction as is shown in FIG. 2; subsequently, stacking these optical fiber arrays 10 so that the longitudinal directions of optical fibers 1 can be approximately orthogonal as shown in FIG. 3; measuring a YI value with SPECTROPHOTOMETER SE2000 (product made by Nippon Denshoku Industries Co., Ltd.); then, placing the optical fiber arrays 10 at a position of 30 cm below a 30 W fluorescent lamp so that each arranged face of the two optical fiber arrays 10 can be irradiated with the fluorescent lamp; leaving them at rest at room temperature for 30 days; afterward, stacking the optical fiber arrays 10 so that the face having been irradiated with the fluorescent lamp directs upward and the longitudinal directions of the optical fibers 1 become approximately orthogonal; measuring the YI value of the optical fiber arrays 10; and then, calculating the change ΔYI between values YI before and after the irradiation with the fluorescent lamp from the obtained values YI.

If a value ΔYI is not less than 5, when the outer surface of the optical fiber is coated with an ultraviolet curing coloring resin for discrimination, the tint of the resin would change, which may prevent its identification, so that the value ΔYI is preferably controlled to 5 or less.

In order to control a yellowing resistance ΔYI after having been left for 30 days under a fluorescent lamp to 5 or less, it is understood from Table 1 that a total amount of an unreacted photoinitiator has only to be controlled to 2.4 × 10⁻³ mole equivalent or less in 1 g of a coated material (the total coated material including a primary material and a secondary material) on the optical fiber.

In addition, optical fibers in Examples 1 to 3 show adequate yellowing resistance even when having used an aromatic polyisocyanate for a polyisocyanate component of a coating material and further when having used the above described general oxidation inhibitor having the General Formula (1) in which the group (R) is not a methyl group.

An optical fiber having no acetophenone photoinitiator added in a secondary material was prepared to try to draw it, but it could not be wound up because its surface was not cured well and highly frictional. Accordingly, the secondary material needs to contain the acetophenone photoinitiator even if it is in a small amount.

## Claims

1. An optical fiber having a coating made from a UV curable resin formed on the outer surface of a bare optical glass fiber, **characterized in that**
the coating comprises at least two layers,
the UV curable resin comprises urethane acrylate, an oxidation inhibitor and a photoinitiator, a polyisocyanate component in the urethane acrylate being an aromatic polyisocyanate, the photoinitiator comprising an acetophenone photoinitiator and an acrylphosphine-oxide photoinitiator;
an inner layer of the at least two layers includes only the acylphosphine-oxide photoinitiator as the photoinitiator;
an outer layer of the at least two layers includes the acetophenone photoinitiator and the acylphosphine-oxide photoinitiator as the photoinitiator;
the acetophenone photoinitiator is 1-hydroxycyclohexyl phenylketone;
the acylphosphine-oxide photoinitiator is 2,4,6-trimethylbenzoyl diphenylphosphine oxide; and
the coated material comprises an unreacted photoinitiator in an amount of 2.4 × 10⁻³ mole equivalent or less in 1 g of the material.

2. The optical fiber according to claim 1, **characterized in that** the aromatic polyisocyanate is tolylene diisocyanate.

3. The optical fiber according to claim 1, **characterized in that** the oxidation inhibitor is 2,2-thio-diethylenebis-[3-(3,5-di-tert-butyl-4-hydroxyphenyl) propionate].

## Patentansprüche

1. Glasfaser, die eine aus einem UV-härtbaren Harz hergestellte Beschichtung, die an der äußeren Oberfläche einer blanken optischen Glasfaser ausgeformt ist, aufweist, **dadurch gekennzeichnet, dass**
die Beschichtung wenigstens zwei Schichten umfasst,
das UV-härtbare Harz Urethanacrylat, einen Oxidationsinhibitor und einen Photoinitiator umfasst, wobei es sich bei einer Polyisocyanat- Komponente in dem Urethanacrylat um ein aromatisches Polyisocyanat handelt, und der Photoinitiator einen Acetophenon-Photoinitiator und einen Acylphosphinoxid-Photoinitiator umfasst;
eine innere Schicht der wenigstens zwei Schichten nur den Acylphosphinoxid-Photoinitiator als Photoinitiator umfasst;
eine äußere Schicht der wenigstens zwei Schichten den Acetophenon-Photoinitiator und den Acylphosphinoxid-Photoinitiator als Photoinitiator umfasst;
es sich bei dem Acetophenon-Photoinitiator um 1-Hydroxycyclohexylphenylketon handelt;
es sich bei dem Acylphosphinoxid-Photoinitiator um 2,4,6-Trimethylbenzoyldiphenylphosphinoxid handelt; und
das beschichtete Material einen unreagierten Photoinitiator in einer Menge von 2,4 x 10⁻³ Mol äquivalent oder weniger in 1 g des Materials umfasst.

2. Glasfaser gemäß Anspruch 1, **dadurch gekennzeichnet, dass** es sich bei dem aromatischen Polyisocyanat um Tolylendiisocyanat handelt.

3. Glasfaser gemäß Anspruch 1, **dadurch gekennzeichnet, dass** es sich bei dem Oxidationsinhibitor um 2,2-Thio-Diethylenbis-[3-(3,5-Di-Tert-Butyl-4-Hydroxyphenyl) Propionat] handelt.

## Revendications

1. Fibre optique présentant un revêtement se composant d'une résine durcissable par rayonnement UV formée sur la surface extérieure d'une fibre de verre optique nue, **caractérisée en ce que**
le revêtement comprend au moins deux couches,
la résine durcissable par rayonnement UV comprend l'acrylate d'uréthane, un inhibiteur d'oxydation et un photoamorceur ; un composant polyisocyanate de l'acrylate d'uréthane consistant en un polyisocyanate aromatique, le photoamorceur comprenant un photoamorceur acétophénone et un photoamorceur oxyde d'acylphosphine ;
une couche intérieure parmi les au moins deux couches comporte uniquement le photoamorceur oxyde d'acylphosphine en tant que photoamorceur ;
une couche extérieure parmi les au moins deux couches comporte le photoamorceur acétophénone et le photoamorceur oxyde d'acylphosphine en tant que photoamorceur ;
le photoamorceur acétophénone est la 1-hydroxycyclohexyl phénylcétone ;
le photoamorceur oxyde d'acylphosphine est l'oxyde de 2,4,6-triméthylbenzoyl diphénylphosphine ; et
le matériau de revêtement comprend un photoamorceur n'ayant pas réagi dans une quantité de 2,4 x 10⁻³ équivalents molaires ou moins par gramme de matériau.

2. Fibre optique selon la revendication 1, **caractérisée en ce que** le polyisocyanate aromatique est le diisocyanate de tolylène.

3. Fibre optique selon la revendication 1, **caractérisée en ce que** l'inhibiteur d'oxydation est le 2,2-thio-diéthylènebis-[3-(3,5-di-tert-butyl-4-hydroxyphényl)propionate].
